# EUROPÄISCHE PATENTANMELDUNG

(11) **EP 0 726 469 A2**
(43) Veröffentlichungstag der Anmeldung: **14.08.1996**
(21) Anmeldenummer: 96250026.0
(22) Anmeldetag: 31.01.1996
(51) Int. Cl.: G01R 27/18

(54) **Schaltungsanordnung zur Überwachung eines elektrischen Netzes auf seinen Isolationszustand**

(30) Priorität: 09.02.1995 DE 19505814
(71) Anmelder: SIEMENS AKTIENGESELLSCHAFT, 80333 München (DE)
(72) Erfinder: Baumgärtl, Ulrich, D-13599 Berlin (DE); Röhl, Wolfgang, D-13503 Berlin (DE)

(57) **Zusammenfassung**

Eine Schaltungsanordnung zur Überwachung eines elektrischen Leiters (1) auf seinen Isolationszustand weist eine Gleichspannungsquelle (11) und eine durch diese gespeiste Brückenschaltung auf. Den einen Zweig der Brückenschaltung bildet ein aus einen Ankoppelwiderstand und einem Fehlerwiderstand gebildeter Spannungsteiler, während ein weiterer Zweig durch zwei Teilerwiderstände gebildet wird. In der Diagonale der Brückenschaltung liegt ein Operationsverstärker zum Vergleich der Spannungen. Ausfall der Gleichspannungsquelle (11) oder ein fehlerhafter Anschluß wirken sich in gleichem Sinn wie ein Isolationsfehler aus.

## Beschreibung

Die Erfindung betrifft eine Schaltungsanordnung zur Überwachung eines elektrischen Netzes auf seinen Isolationszustand mit einer Gleichspannungsquelle und mit einem Überwachungskreis zur Meldung eines mittels der Gleichspannungsquelle gemessenen Isolationsfehlers, wobei als Meßgröße für den Isolationswiderstand des Netzes ein Spannungssignal dient und der Überwachungskreis eine Vergleichsschaltung zum Vergleich des Verhältnisses einer Referenzspannung und einer von einem Fehlerwiderstand abhängigen Meßspannung umfaßt.

Eine Schaltungsanordnung dieser Art ist durch die DE 41 09 586 A1 bekanntgeworden. Dort wird ein absoluter Spannungswert gemessen. Die richtige Erfassung eines Isolationsfehlers setzt daher eine zuverlässig arbeitende Gleichspannungsquelle voraus.

Der Erfindung liegt hiervon ausgehend die Aufgabe zugrunde, eine von der absoluten Hohe der Gleichspannung der Gleichspannungsquelle unabhängige Messung zu ermöglichen, um die Sicherheit der Fehlererfassung zu verbessern.

Diese Aufgabe wird gemäß der Erfindung dadurch gelöst, daß die Vergleichsschaltung einen Operationsverstärker aufweist, der die Diagonale einer Brückenschaltung bildet, die einen an der Gleichspannungsquelle liegenden Spannungsteiler und einen weiteren, aus einem Ankoppelwiderstand und dem Fehlerwiderstand des überwachten Netzes gebildeten Spannungsteiler umfaßt. Hiermit wird eine Messung eines Verhältnisses von Widerständen durchgeführt, die von der absoluten Höhe der Spannung der Gleichspannungsquelle unabhängig ist.

Eine noch weitergehende Selbstüberwachung der Schaltungsanordnung kann dadurch erreicht werden, daß der Ankoppelwiderstand und der netzseitige Eingang des Operationsverstärkers durch räumlich getrennte Klemmstellen mit dem zu überwachenden Netz verbunden sind.

Die Erfindung wird im folgenden anhand des in der Figur gezeigten Ausführungsbeispieles einer Schaltungsanordnung nach der Erfindung näher erläutert.

Die in der Figur gezeigte Schaltungsanordnung dient zur Überwachung eines zu einem elektrischen Netz gehörenden Leiters 1 auf Isolationsfehler. Ein solcher Isolationsfehler ist idealisiert als mit einem Pfeil versehener Fehlerwiderstand 2 dargestellt. Über den Fehlerwiderstand 2 fließt somit ein Erdschlußstrom aus dem Leiter 1 in einen Erdungsleiter 3. Der Erdungswiderstand 2 bildet mit einem Ankoppelwiderstand 4 den einen Zweig einer Brückenschaltung, während der weitere Brückenzweig fest eingestellte Widerstände 5 und 6 aufweist. In der Diagonale der Brückenschaltung liegt ein Operationsverstärker 7, der somit die Spannungen an den Verbindungspunkten der Widerstände 2 und 4 (Meßspannung) sowie 5 und 6 (Referenzspannung) vergleicht. Vom Ausgang des Operationsverstärkers 7 wird eine Meldeeinrichtung 10 gesteuert, um den Isolationszustand des Leiters 1 zu melden.

Die gezeigte Schaltungsanordnung wird durch eine Gleichspannungsquelle 11 gespeist, die einseitig mit dem Erdungsleiter 3 verbunden ist und an die beide durch die Widerstände 2 und 4 bzw. 5 und 6 gebildeten Spannungsteiler angelegt sind. Eine Verringerung des Isolationswiderstandes bedeutet daher eine Verringerung des Wertes des Widerstandes 2 und damit eine veränderte Spannung an dem Anschlußpunkt 12, in dem der Operationsverstärker 7 mit dem Leiter 1 verbunden ist. Dies führt zum Ansprechen der Meldeeinrichtung 10.

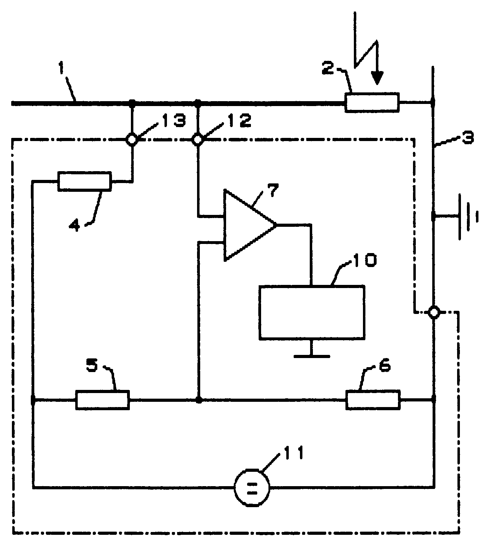

In der Figur 1 ist strichpunktiert das Überwachungsgerät angedeutet. Der Eingang des Operationsverstärkers 7 und der Ankoppelwiderstand 4 sind mittels gesonderter Klemmstellen 12 und 13 mit dem zu überwachenden Leiter 1 verbunden. Auf diese Weise wird sichergestellt, daß ein Ausfall der Gleichspannungsquelle 11 oder ein fehlerhafter Anschluß des Überwachungszweiges zum Ansprechen der Meldeeinrichtung 10 führt. Fehler dieser Art wirken nämlich im gleichen Sinne wie ein Isolationsfehler.

## Patentansprüche

1. Schaltungsanordnung zur Überwachung eines elektrischen Netzes (1) auf seinen Isolationszustand mit einer Gleichspannungsquelle (11) und mit einem Überwachungskreis zur Meldung eines mittels der Gleichspannungsquelle (11) gemessenen Isolationsfehlers, wobei als Meßgröße für den Isolationswiderstand des Netzes (1) ein Spannungssignal dient und der Überwachungskreis eine Vergleichsschaltung zum Vergleich des Verhältnisses einer Referenzspannung und einer von einem Fehlerwiderstand (2) abhängigen Meßspannung umfaßt,
**dadurch gekennzeichnet,** daß die Vergleichsschaltung einen Operationsverstärker (7) aufweist, der die Diagonale einer Brückenschaltung bildet, die einen an der Gleichspannungsquelle (11) liegenden Spannungsteiler (5, 6) und einen weiteren, aus einem Ankoppelwiderstand (4) und dem Fehlerwiderstand (2) des überwachten Netzes gebildeten Spannungsteiler umfaßt.

2. Schaltungsanordnung nach Anspruch 1,
**dadurch gekennzeichnet,** daß der Ankoppelwiderstand (4) und der netzseitige Eingang des Operationsverstärkers (7) durch räumlich getrennte Klemmstellen (12, 13) mit dem zu überwachenden Netz (1) verbunden sind.
